# EUROPEAN PATENT APPLICATION

(11) **EP 4 679 848 A1**
(43) Date of publication of application: **14.01.2026**
(21) Application number: 25153586.0
(22) Date of filing: 23.01.2025
(51) Int. Cl.: H04N 23/60, H04N 23/62, H04N 23/63, H04N 23/661, G01C 21/36, G01C 21/00, G06V 20/56

(54) **METHOD AND DEVICE FOR CAPTURING IMAGE, STORAGE MEDIUM, AND COMPUTER PROGRAM PRODUCT**

(30) Priority: 12.07.2024 CN 202410940269
(71) Applicant: Beijing Xiaomi Mobile Software Co., Ltd., Beijing 100085 (CN)
(72) Inventor: PENG, Cong, Beijing, 100085 (CN)
(74) Representative: Dehns Germany Partnerschaft mbB

(57) **Abstract**

The disclosure relates to a method and device for capturing an image, a storage medium, and a computer program product. The method includes: determining (S101), from a map interface displayed by a mobile terminal, at least one to-be-captured road segment, where each to-be-captured road segment includes at least one capturing object; and performing (S102) image acquisition in a case where the mobile terminal travels to a target road segment in the at least one to-be-captured road segment.

## Description

### TECHNICAL FIELD

The present disclosure relates to the technical field of image processing, in particular to a method and device for capturing an image, a storage medium, and a computer program product.

### BACKGROUND OF THE INVENTION

Demand of users for in-vehicle video capturing is popular, and capturing scenery along a route is a common way to record life. During the in-vehicle video capturing, an appropriate mount or pan-tilt fixation device is usually selected for avoiding picture shaking during capturing by a mobile phone or a camera.

### SUMMARY OF THE INVENTION

To solve the problems in the related art, the present disclosure provides a method and device for capturing an image, a storage medium, and a computer program product. The problem that when users capture a video in a vehicle, the users forget to capture when approaching a capturing spot, forget to turn on a camera at proper time, or may even be unsure whether scenery at the spot is worth recording is solved.

According to a first aspect of examples of the present disclosure, a method for capturing an image is provided. The method includes:
determining, from a map interface displayed by a mobile terminal, at least one to-be-captured road segment, where each to-be-captured road segment includes at least one capturing object; and
performing image acquisition in a case where the mobile terminal travels to a target road segment in the at least one to-be-captured road segment.

In some examples, the method further includes:
configuring a capturing parameter corresponding to the to-be-captured road segment in a case where a configuration operation on the to-be-captured road segment is detected; where the capturing parameter of the to-be-captured road segment includes capturing parameters of each capturing object on the to-be-captured road segment.

In some examples, the configuring a capturing parameter corresponding to the to-be-captured road segment in a case where a configuration operation on the to-be-captured road segment is detected includes:
in a case where the configuration operation is detected, obtaining, from a preset feature library based on identification information of the to-be-captured road segment on which the configuration operation acts, a feature of the to-be-captured road segment; where the feature of the to-be-captured road segment includes a feature of the at least one capturing object on the to-be-captured road segment, and the preset feature library pre-stores identifications of each road segment and features of each road segment as well as identifications of capturing objects on each road segment and features of each capturing object;
generating first prompt information based on the feature of the to-be-captured road segment, and outputting the first prompt information; and
configuring, based on the first prompt information, the capturing parameter corresponding to the to-be-captured road segment.

In some examples, the configuring a capturing parameter corresponding to the to-be-captured road segment in a case where a configuration operation on the to-be-captured road segment is detected further includes:
determining a target capturing parameter from preset capturing parameters of a server based on the identification information of the to-be-captured road segment; where the preset capturing parameters are historical capturing parameters used when travelling to the to-be-captured road segment; and
determining that the target capturing parameter is the capturing parameter corresponding to the to-be-captured road segment.

In some examples, the determining, from a map interface displayed by a mobile terminal, at least one to-be-captured road segment includes:
in a case where a selection operation on the map interface is detected, determining, from the map interface based on the selection operation, the at least one to-be-captured road segment; and/or,
in a case where a route search instruction is detected, determining, based on the route search instruction and map information in the map interface, the at least one to-be-captured road segment from preset road segments stored in a server; where the preset road segments are historical road segments travelled by different mobile terminals and uploaded to the server by the different mobile terminals after performing image acquisition.

In some examples, the performing image acquisition in a case where the mobile terminal travels to a target road segment in the at least one to-be-captured road segment includes:
performing the image acquisition in a case where the mobile terminal is in an on-vehicle mode, and travels to the target road segment in the at least one to-be-captured road segment.

In some examples, the performing the image acquisition in a case where the mobile terminal is in an on-vehicle mode, and travels to the target road segment in the at least one to-be-captured road segment includes:
in a case where the mobile terminal is in the on-vehicle mode, and travels to the target road segment, determining a current environmental parameter of the target road segment;
obtaining a corrected capturing parameter by adjusting a capturing parameter configured for the target road segment based on the current environmental parameter; and
performing the image acquisition based on the corrected capturing parameter; and
the method further includes:
   uploading identification information of the target road segment and the corrected capturing parameter to a server after completing the image acquisition for the target road segment.

In some examples, the performing image acquisition in a case where the mobile terminal travels to a target road segment in the at least one to-be-captured road segment further includes:

in a case where a distance between a current position of the mobile terminal and a start point of the target road segment is less than a preset threshold, outputting second prompt information; and

in cases where the mobile terminal travels to the target road segment and a capturing instruction input based on the second prompt information is detected, performing the image acquisition.

In some examples, the method further includes:
in a case where the mobile terminal travels to an end point of the target road segment, outputting third prompt information; and
in a case where a capturing end instruction input based on the third prompt information is detected, generating a target video corresponding to the target road segment based on an image acquired between the start point of the target road segment and the end point of the target road segment.

In some examples, the method further includes:
uploading identification information of the target road segment and a capturing parameter configured for the target road segment to a server after completing the image acquisition for the target road segment.

In some examples, where the at least one to-be-captured road segment includes a plurality of to-be-captured road segments, and the method further includes:
in a case where the plurality of to-be-captured road segments complete image acquisition, obtaining integrated data by integrating capturing parameter configured based on the plurality of to-be-captured road segments,
outputting an instruction message by the mobile terminal, where the instruction message is configured to indicate an uploading operation; and
in a case where an uploading instruction input based on the instruction message is detected, uploading the identification information and the integrated data of the plurality of to-be-captured road segments that are captured to a server.

According to a second aspect of the examples of the present disclosure, a device for capturing an image is provided. The device includes:
a determination module configured to determine, from a map interface displayed by a mobile terminal, at least one to-be-captured road segment; where each to-be-captured road segment includes at least one capturing object; and
an image acquisition module configured to perform image acquisition in a case where the mobile terminal travels to a target road segment in the at least one to-be-captured road segment.

In some examples, the device further includes:
configuring a capturing parameter corresponding to the to-be-captured road segment in a case where a configuration operation on the to-be-captured road segment is detected; where the capturing parameter of the to-be-captured road segment includes capturing parameters of each capturing object on the to-be-captured road segment.

In some examples, the device further includes:
in a case where the configuration operation is detected, obtaining, from a preset feature library based on identification information of the to-be-captured road segment on which the configuration operation acts, a feature of the to-be-captured road segment; where the feature of the to-be-captured road segment includes a feature of the at least one capturing object on the to-be-captured road segment, and the preset feature library pre-stores identifications of each road segment and features of each road segment as well as identifications of capturing objects on each road segment and features of each capturing object;
generating first prompt information based on the feature of the to-be-captured road segment, and outputting the first prompt information, and outputting the first prompt information; and
configuring, based on the first prompt information, the capturing parameter corresponding to the to-be-captured road segment.

In some examples, the device further includes:
determining a target capturing parameter from preset capturing parameters of a server based on the identification information of the to-be-captured road segment; where the preset capturing parameters are historical capturing parameters used when travelling to the to-be-captured road segment; and
determining that the target capturing parameter is the capturing parameter corresponding to the to-be-captured road segment.

In some examples, the device further includes:
in a case where a selection operation on the map interface is detected, determining, from the map interface based on the selection operation, the at least one to-be-captured road segment; and/or,
in a case where a route search instruction is detected, determining, based on the route search instruction and map information in the map interface, the at least one to-be-captured road segment from preset road segments stored in a server; where the preset road segments are historical road segments travelled by different mobile terminals and uploaded to the server by the different mobile terminals after performing image acquisition.

In some examples, the device further includes:
performing the image acquisition in a case where the mobile terminal is in an on-vehicle mode, and travels to the target road segment in the at least one to-be-captured road segment.

In some examples, the device includes:
in a case where the mobile terminal is in the on-vehicle mode, and travels to the target road segment, determining a current environmental parameter of the target road segment;
obtaining a corrected capturing parameter by adjusting a capturing parameter configured for the target road segment based on the current environmental parameter; and
performing the image acquisition based on the corrected capturing parameter; and
the device further includes:
   uploading identification information of the target road segment and the corrected capturing parameter to a server after completing the image acquisition for the target road segment.

In some examples, the device further includes:
in a case where a distance between a current position of the mobile terminal and a start point of the target road segment is less than a preset threshold, outputting second prompt information; and
in cases where the mobile terminal travels to the target road segment and a capturing instruction input based on the second prompt information is detected, performing the image acquisition.

In some examples, the device further includes:
in a case where the mobile terminal travels to an end point of the target road segment, outputting third prompt information; and
in a case where a capturing end instruction input based on the third prompt information is detected, generating a target video corresponding to the target road segment based on an image acquired between the start point of the target road segment and the end point of the target road segment.

In some examples, the device further includes:
uploading identification information of the target road segment and a capturing parameter configured for the target road segment to a server after completing the image acquisition for the target road segment.

In some examples, where the at least one to-be-captured road segment includes a plurality of to-be-captured road segments, and the device further includes:
in a case where the plurality of to-be-captured road segments complete image acquisition, obtaining integrated data by integrating capturing parameter configured based on the plurality of to-be-captured road segments,
outputting an instruction message by the mobile terminal, where the instruction message is configured to indicate an uploading operation; and
in a case where an uploading instruction input based on the instruction message is detected, uploading the identification information and the integrated data of the plurality of to-be-captured road segments that are captured to a server.

According to a third aspect of the examples of the present disclosure, a device is provided. The device includes:
one or more processors; and
a memory configured to store computer programs or instructions; where
the one or more processors executes the computer programs or the instructions to implement steps of the method according to any one of the first aspect.

According to a fourth aspect of the examples of the present disclosure, a non-transitory computer-readable storage medium is provided. The storage medium stores one or more computer programs configured to be executed by one or more processors of a processing device, the one or more programs including instructions, where the instructions, when executed by the processing device, cause the processing device to implement steps of the method according to any one of the first aspect.

According to a fifth aspect of the examples of the present disclosure, a computer program product is further provided. The computer program product includes computer programs or instructions, where the computer programs or the instructions, when executed by one or more processors of a processing device, cause the processing device to implement steps of the method according to any one of the first aspect.

The technical solution according to the example of the present disclosure can have the following beneficial effects:

In the method for capturing an image according to the example of the present disclosure, the at least one to-be-captured road segment is determined from the map interface displayed by the mobile terminal. Each to-be-captured road segment includes the at least one capturing object. In a case where the mobile terminal travels to the target road segment in the at least one to-be-captured road segment, the image acquisition is performed.

That is, the to-be-captured road segment including the capturing object is selected in advance before the image acquisition, such that it is guaranteed that in a case where the mobile terminal travels to the target road segment in the at least one to-be-captured road segment, capturing based on the target road segment can be automatically implemented, and the user can be assisted in more intelligently capturing and obtaining a high-quality image advantageously.

It should be understood that the foregoing general description and the following detailed description are merely illustrative and explanatory, and cannot limit the present disclosure.

### BRIEF DESCRIPTION OF DRAWINGS

The drawings here are incorporated into the description as a constituent part of the description, illustrate examples conforming to the present disclosure, and serve to explain principles of the present disclosure along with the description.
FIG. 1 is a flowchart of a method for capturing an image according to an example.
FIG. 2 is a flowchart II of a method for capturing an image according to an example.
FIG. 3 is a block diagram of a device for capturing an image according to an example.
FIG. 4 is a structural block diagram of a device 400 according to an example.

### DETAILED DESCRIPTION OF THE INVENTION

Examples will be described in detail here, and their instances are shown in the accompanying drawings. When the following description involves the accompanying drawings, the same numerals in different accompanying drawings indicate the same or similar elements unless otherwise indicated. Embodiments described in the following examples do not denote all embodiments consistent with the present disclosure. On the contrary, these embodiments are merely instances of devices and methods consistent with some aspects of the present disclosure as detailed in the appended claims.

The users probably forget to capture when approaching a capturing spot, forget to turn on the camera at proper time, or may even be unsure whether scenery at the spot is worth recording. As for this, the present disclosure provides a method and device for capturing an image, a storage medium, and a computer program product.

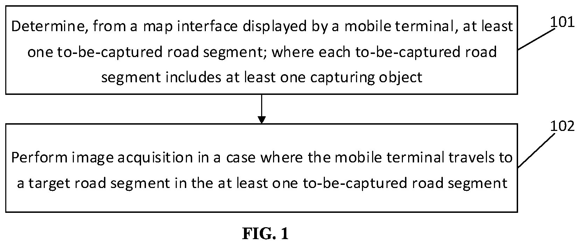

FIG. 1 is a flowchart of a method for capturing an image according to an example. As shown in FIG. 1, the method mainly includes:
Step 101, at least one to-be-captured road segment is determined from a map interface displayed by a mobile terminal. Each to-be-captured road segment includes at least one capturing object.
Step 102, in a case where the mobile terminal travels to a target road segment in the at least one to-be-captured road segment, image acquisition is performed.

It should be noted that the method for capturing an image according to the present disclosure may be performed by the mobile terminal. The mobile terminal may include a mobile phone, a portable android device, a notebook computer, a wearable electronic device, etc. The capturing object refers to a content desired to be shot by a user, and the capturing object may include, but is not limited to, at least one of the following: scenery, an architecture, an animal or a plant. The capturing object may also be referred to as a capturing spot or point, which is not limited in the present disclosure.

The to-be-captured road segment refers to a road segment including the capturing object. The to-be-captured road segment may include, but is not limited to, at least one of the following: an urban road segment, a rural road segment or a scenic sightseeing area road segment.

It should be noted that the map interface of the mobile terminal may be displayed by detecting an operation on the map application of the mobile terminal, or by synchronizing the map interface on the vehicle to the mobile terminal.

It should be noted that a travel route may be selected according to a start point and an end point on the map interface of the mobile terminal, and then the to-be-captured road segment is determined according to the fact whether the travel route has the capturing object.

Illustratively, a map application of the mobile terminal is opened and the map interface is opened and displayed. In a search box of the map interface, "A" is input as the start point, "B" is input as the end point, and then the map automatically plans a plurality of possible routes. Then, the routes are searched to determine whether the capturing object is included through a nearby search function of the map interface. In a case where the travel road segment includes the capturing object, it is determined as the to-be-captured road segment.

In the example of the present disclosure, the at least one to-be-captured road segment is determined from the map interface displayed by the mobile terminal. Each to-be-captured road segment includes the at least one capturing object. In a case where the mobile terminal travels to the target road segment in the at least one to-be-captured road segment, the image acquisition is performed.

That is, the to-be-captured road segment including the capturing object is selected in advance before the image acquisition, such that it is guaranteed that in a case where the mobile terminal travels to the target road segment in the at least one to-be-captured road segment, capturing based on the target road segment can be automatically implemented, and the user can be assisted in more intelligently capturing and obtaining a high-quality image advantageously.

In some examples, the step that at least one to-be-captured road segment is determined from a map interface displayed by a mobile terminal includes:

in a case where a selection operation on the map interface is detected, the at least one to-be-captured road segment is determined from the map interface based on the selection operation; and/or,

in a case where a route search instruction is detected, the at least one to-be-captured road segment is determined from preset road segments stored in a server based on the route search instruction and map information in the map interface. The preset road segments are historical road segments travelled by different mobile terminals and uploaded to the server by the different mobile terminals after performing image acquisition.

It should be noted that the start point and a destination (the end point) for the image acquisition may be manually input and/or voice input into the map interface displayed by the mobile terminal. In a case where the mobile terminal plans a plurality of routes according to the start point and the destination, a reminding message is output. The reminding message is configured to indicate the selection operation. In a case where the selection operation based on the reminding message is detected, the at least one to-be-captured road segment is determined from the plurality of routes according to the fact that the capturing object is included.

Here, the reminding message may be denoted in the form of words and/or voices, and is configured to remind the user to perform the selection operation on the to-be-captured road segment.

It should be noted that the plurality of routes displayed on the map interface of a display screen of the vehicle may be obtained through the mobile terminal. The plurality of routes displayed on the map interface of the display screen of the vehicle are determined by manually inputting and/or voice inputting the start point and the destination for the image acquisition. In a case where the mobile terminal obtains the plurality of routes displayed on the map interface of the display screen of the vehicle, the reminding message is output. In a case where the selection operation based on the reminding message is detected, the at least one to-be-captured road segment is determined from the plurality of routes according to the fact that the capturing object is included.

It can be understood that the plurality of routes can be obtained by manually inputting and/or voice inputting the start point and the destination for image acquisition into the map interface displayed by the mobile terminal, or the mobile terminal obtains the plurality of routes displayed on the map interface of the display screen of the vehicle. In a case where the mobile terminal cannot obtain the map interface due to poor signals, the map interface can be obtained through the vehicle. Thus, it is guaranteed that the mobile terminal can obtain the plurality of routes by different methods, and poor user experience caused by signals is reduced.

It should be noted that the selection operation on the map interface and/or the route search instruction may be detected through a sensor. Here, the sensor may include, but is not limited to, at least one of the following: an acceleration sensor, a gyroscope sensor, a pressure sensor, or a magnetic sensor.

Here, the route search instruction may include, but is not limited to, at least one of the following: image search, text search or voice search.

Illustratively, the user opens the map interface and finds a function entrance supporting the image search. Based on images uploaded by other users, the images may include a preset road segment, a capturing object of the preset road segment, a capturing parameter corresponding to the preset road segment and a capturing parameter corresponding to the capturing object of the preset road segment. The map interface implements analysis through image recognition technology, and the preset road segment of the image is matched with a preset road segment stored by the server, so as to determine the to-be-captured road segment.

Illustratively, capturing parameters obtained from images uploaded by other users are adjusted according to a site environment of the to-be-captured road segment, thus contributing to optimization of image quality, being applicable to different capturing scenes, and improving capturing efficiency.

It can be understood that the user can determine the to-be-captured road segment through the images uploaded by other users without manually inputting a complicated address and a name of a road segment. A road segment for which the user desires to search can be accurately identified by quickly finding and planning relevant routes, thus greatly simplifying a search process and improving operation convenience and satisfaction of the user. Moreover, the images uploaded by other users include the capturing parameters, such that operation steps can be simplified in subsequent setting of the capturing parameter.

In the example of the present disclosure, in a case where the selection operation on the map interface is detected, the at least one to-be-captured road segment is determined from the map interface based on the selection operation. In a case where the route search instruction is detected, the at least one to-be-captured road segment is determined from the preset road segments stored in the server based on the route search instruction and the map information in the map interface. The preset road segments are historical road segments travelled by different mobile terminals and uploaded to the server by the different mobile terminals after performing image acquisition. These two methods can determine the to-be-captured road segment more advantageously and quickly, and the user can flexibly select an appropriate method according to his/her own demand and preferences, thus improving the user experience.

In some examples, the method further includes:
in a case where a configuration operation on the to-be-captured road segment is detected, a capturing parameter corresponding to the to-be-captured road segment is configured. The capturing parameter of the to-be-captured road segment includes capturing parameters of each capturing object on the to-be-captured road segment.

It should be noted that in a case where the configuration operation on the to-be-captured road segment is detected, different capturing parameters may be configured for different to-be-captured road segments correspondingly, and the same capturing parameter may alternatively be configured for different to-be-captured road segments.

Here, the configuration operation may include, but is not limited to, at least one of the following: sliding, click or selection.

The capturing parameter may include, but is not limited to, at least one of the following: a shutter speed, an aperture, an international standardization organization (ISO) value, exposure compensation, white balance, a focusing mode or image resolution.

It can be understood that in a case where the configuration operation on the to-be-captured road segment is detected, an optimal capturing effect can be guaranteed in different road segments and the same capturing object in different road segments can have different capturing effects by configuring different parameters since different road segments can have different light conditions and capturing demand. It is clear that the same capturing parameter may alternatively be configured for different to-be-captured road segments, and different to-be-captured road segments merely need one capturing parameter, thus simplifying an operation by the user and shortening configuration time.

It should be noted that the configuration operation on the to-be-captured road segment may be detected through the sensor. Here, the sensor may include, but is not limited to, at least one of the following: the acceleration sensor, the gyroscope sensor, the pressure sensor, or the magnetic sensor.

It should be noted that the capturing parameter of the to-be-captured road segment may be configured according to the capturing parameter of the capturing object of the to-be-captured road segment.

It can be understood that since the capturing object refers to the content desired to be shot by the user, the capturing parameter can be more accurately matched with the capturing object if the capturing parameter of the to-be-captured road segment is set according to the capturing parameter of the capturing object of the to-be-captured road segment. When the mobile terminal travels to the capturing object and captures the capturing object, a capturing effect closer to a capturing effect desired by the user can be obtained and capturing experience of the user can be improved.

It should be noted that since the capturing parameter of the to-be-captured road segment includes the capturing parameters of each capturing object on the to-be-captured road segment, the mobile terminal may automatically capture the capturing object based on the capturing parameter of the capturing object when travelling to the capturing object, or capture the capturing object according to a prompt.

Illustratively, the capturing object is a waterfall, and capturing parameters configured for the waterfall are as follows: a shutter speed is 1/2 second, ISO is 100, and an aperture is f/11. Based on the capturing parameters configured for the waterfall, the mobile terminal automatically captures the waterfall when travelling to the waterfall. Or, **a voice prompt of "the waterfall is just ahead, please get ready to** capture" is given before the mobile terminal travels to the waterfall, and the mobile terminal captures the waterfall based on the capturing parameters configured when travelling to the waterfall.

In the example of the present disclosure, in a case where the configuration operation on the to-be-captured road segment is detected, the capturing parameter corresponding to the to-be-captured road segment is configured. The capturing parameter of the to-be-captured road segment includes the capturing parameters of each capturing object on the to-be-captured road segment, thus improving the capturing effect and experience of the user.

In some examples, the step that in a case where the mobile terminal travels to a target road segment in the at least one to-be-captured road segment, image acquisition is performed includes:

In a case where the mobile terminal is in an on-vehicle mode, and travels to the target road segment in the at least one to-be-captured road segment, the image acquisition is performed.

The on-vehicle mode means state setting of the mobile terminal, and is configured to perform some operations inside the vehicle by the mobile terminal.

In some examples, whether a distance between the mobile terminal and the vehicle falls beyond a preset range may be determined by detecting real-time position information of the mobile terminal and real-time position information of the vehicle, to determine whether the mobile terminal is inside the vehicle. The preset range here may be 2 meters.

Illustratively, both the vehicle and the mobile terminal are equipped with a global positioning system (GPS) positioning device, the real-time position information (longitude X1, latitude Y1) of the mobile terminal is determined by the GPS of the mobile terminal, and the real-time position information (longitude X2, latitude Y2) of the vehicle is determined by the GPS of the vehicle. The distance between the mobile terminal and the vehicle is computed based on the real-time position information. For example, the distance between the mobile terminal and the vehicle is 0.5 meters after computation, and the mobile terminal may be determined to be inside the vehicle accordingly.

It should be noted that whether an angle difference between an angle from the vehicle to a capturing object and an angle from the mobile terminal to the capturing object is within a preset angle range may be determined. If the angle difference is within the preset angle range, whether a distance difference between a distance from the vehicle to a capturing object and a distance from the mobile phone to the capturing object is within a preset distance is determined. If the distance difference is within the preset distance, it is determined that the mobile phone is inside the vehicle.

Illustratively, a longitude and a latitude of the capturing object are (A, B), a longitude and a latitude of the vehicle are (C, D), and a longitude and a latitude of the mobile terminal are (E, F). After computation, the angle of the vehicle relative to the capturing object is 20 degrees and the angle of the mobile terminal relative to the capturing object is 25 degrees, between which a difference is ±5 degrees. The preset angle range is ±30 degrees, and the angle difference is apparently within the preset angle range. Then, the distance between the vehicle and the capturing object is computed at 4 meters and the distance between the mobile terminal and the capturing object is computed at 3 meters, between which the distance difference is 1 meter. The preset distance is 2 meters, and it can be determined apparently that the mobile terminal is inside the vehicle.

It can be understood that through the on-vehicle mode, determining whether the mobile terminal is inside the vehicle based on the distances of the real-time position information of the vehicle and of the real-time position information of the mobile terminal, or determining whether the mobile terminal is inside the vehicle based on the angle difference between the angle from the mobile terminal to the capturing object and the angle from the vehicle to the capturing object as well as the distance difference between the distance from the mobile terminal to the capturing object and the distance from the vehicle to the capturing object all reflect that the present disclosure is applied to a scenario where the mobile terminal is inside the vehicle, and also reflect linkage between the vehicle and the mobile terminal. In addition, in a case of travelling to the target road segment in the at least one to-be-captured road segment, the target road segment can be automatically captured based on the capturing parameter configured for the target road segment, such that the user can be assisted in more intelligently capturing and obtaining the high-quality image.

It should be noted that if the route to be captured displayed on the map interface of the mobile terminal is inconsistent with a captured route displayed on the map interface of the vehicle, the image acquisition is not performed.

It can be understood that when the routes to be captured by the mobile terminal and the vehicle are inconsistent, it cannot be guaranteed that the user is reminded to perform the image acquisition in time when arriving at the target road segment, and the route probably deviates during capturing of the target road segment. Thus, when the routes to be captured of the mobile terminal and the vehicle are inconsistent, the image acquisition may lead to capturing of a capturing object or area irrelevant to a task, reducing quality and usability of an image. In addition, unnecessary capturing can lead to waste of storage resources, increase energy consumption of the mobile terminal, and shorten a service life of the mobile terminal. That is, the image acquisition is not performed in a case of route inconsistency, thus guaranteeing correctness of image acquisition and saving resources advantageously.

According to the example of the present disclosure, the linkage between the vehicle and the mobile terminal is reflected from the fact that in a case where the mobile terminal is in the on-vehicle mode, and travels to the target road segment in the at least one to-be-captured road segment, the image acquisition is implemented. In addition, in a case of travelling to the target road segment in the at least one to-be-captured road segment, the target road segment can be automatically captured, and the user can be assisted in more intelligently capturing and obtaining the high-quality image advantageously.

In some examples, the step that in a case where a configuration operation on the to-be-captured road segment is detected, a capturing parameter corresponding to the to-be-captured road segment is configured includes:
in a case where the configuration operation is detected, a feature of the to-be-captured road segment from a preset feature library is obtained based on identification information of the to-be-captured road segment on which the configuration operation acts; where the feature of the to-be-captured road segment includes a feature of the capturing object on the to-be-captured road segment, and the preset feature library pre-stores identifications of each road segment and features of each road segment as well as identifications of capturing objects on each road segment and features of each capturing object;
first prompt information is generated based on the feature of the to-be-captured road segment, and the first prompt information is output; and
based on the first prompt information, the capturing parameter corresponding to the to-be-captured road segment is configured. Here, the identification information of the to-be-captured road segment may include, but is not limited to, at least one of the following: a number of the road segment or a name of the road segment.

The feature of the to-be-captured road segment may include, but is not limited to, at least one of the following: a length of the road segment, a width of the road segment, an allowable speed of the road segment or a traffic feature.

The identification of the capturing object may include, but is not limited to, at least one of the following: a geographical position identification or a visual feature identification. The geographical location identification may include latitude and longitude coordinates, for example, 39 degrees north latitude and 116 degrees east longitude. The visual feature identification may include a landmark building or an object, such as the Great Wall or the Guest-greeting Pine on Huangshan Mountain.

The feature of the capturing object may include, but is not limited to, at least one of the following: a shape of the capturing object, a size of the capturing object, or an environment where the capturing object is located.

Illustratively, when the capturing object is an arch bridge having a shape of an arc. Since the arc is more likely to produce a visual focus point, a depth of field and a focus position may be controlled by adjusting the aperture. When the capturing object is a large-scale capturing object (e.g., a large-scale event site), distant details may be captured with a telephoto lens or a broad field of vision is shown with a wide-angle lens. When the environment where the capturing object is located is a cloudy environment, exposure is increased by increasing the ISO or using a small shutter speed.

The first prompt information may be voice prompt information or text prompt information, and is prompt information configured to remind the user to configure the capturing parameter.

Illustratively, when the configuration operation is detected and the feature of the to-be-captured road segment is obtained, the user is prompted to set the capturing parameter, for example, through a voice **prompt: "the feature of the road segment is obtained, please set the** capturing parameter" **or by** displaying a text pop-**up window with a content "the feature of the road segment is obtained, please set** the capturing parameter" **on the mobile terminal.**

It should be noted that the preset feature library may be saved in the server.

It can be understood that the identification(s) of each road segment and the feature(s) of each road segment as well as the identification(s) of the capturing object(s) on each road segment and the feature(s) of each capturing object are obtained from the preset feature library. The feature of the to-be-captured road segment is determined by combining the feature of the road segment and the feature of the capturing object. Compared with the feature of the to-be-captured road segment that is determined merely based on the feature of the road segment or the feature of the to-be-captured road segment that is determined merely based on the feature of the capturing object, the feature determined by combining the feature of the road segment and the feature of the capturing object is more accurate apparently. Thus, the capturing parameter is configured more precisely based on the feature of the to-be-captured road segment, thereby achieving a better image acquisition effect.

In the example of the present disclosure, in a case where the configuration operation on the to-be-captured road segment is detected, the capturing parameter corresponding to the to-be-captured road segment is configured. The feature of the to-be-captured road segment is obtained from the preset feature library based on the identification information of the to-be-captured road segment, where the feature of the to-be-captured road segment includes the feature of the capturing object on the to-be-captured road segment. The first prompt information is generated based on the feature of the to-be-captured road segment that is obtained, and is configured to remind the user to configure, based on the reminding message, the corresponding capturing parameter for the to-be-captured road segment. Thus, it is guaranteed that the user can implement precise configuration of the configured parameter based on the feature of the to-be-captured road segment before the image acquisition, and achieve a better image capturing effect.

In some examples, the step that in a case where a configuration operation on the to-be-captured road segment is detected, a capturing parameter corresponding to the to-be-captured road segment is configured further includes:
a target capturing parameter is determined from preset capturing parameters of a server based on the identification information of the to-be-captured road segment; where the preset capturing parameters are historical capturing parameters used when travelling to the road segment; and
it is determined that the target capturing parameter is the capturing parameter corresponding to the to-be-captured road segment.

It should be noted that preset capturing parameter may be obtained through a social media platform of the server.

Illustratively, based on a screening condition, the target capturing parameter may be determined from the preset capturing parameters of the server according to the identification information of the to-be-captured road segment. The screening condition is configured to determine the target capturing parameter from the preset capturing parameters. The screening condition may include, but is not limited to, at least one of the following: a popular capturing parameter, a comprehensively-set capturing parameter, a latest capturing parameter or a capturing parameter with high weather similarity.

It can be understood that the popular capturing parameter is used by a large number of users during capturing, often conforms to aesthetic habits of most users, and is conducive to improvements in the capturing effect and capturing efficiency.

Illustratively, the identification information of the to-be-captured road segment (for example, the name of the road segment) and the popular capturing parameter are used as screening conditions for searching on the social media platform of the server, and the user selects the capturing parameter desired by the user from recommended results of the social media platform, thus improving the capturing effect and the capturing efficiency.

It can be understood that the comprehensively-set capturing parameter can adapt to varying light conditions, color environments and capturing distances. The comprehensively-set capturing parameter is conducive to the improvement in the capturing effect and the capturing efficiency.

Illustratively, when the comprehensively-set capturing parameter includes a capturing parameter set according to the distance between the target road segment and the capturing object, the capturing parameter searched for by the server based on the screening condition are more precise, and is conducive to the improvements in the capturing effect and the capturing efficiency.

It can be understood that the latest capturing parameter is more in line with the aesthetic demand from modern users, and can adapt to a change of the capturing object, thus improving the capturing effect and the capturing efficiency.

Illustratively, flowers of a target road segment come out in advance due to weather, and the latest capturing parameter can help the user to set the appropriate capturing parameter accordingly. Thus, the latest capturing parameter is conducive to the improvement in the capturing effect.

It can be understood that the capturing parameter with high weather similarity can adapt to the change of weather, and a more precise capturing parameter is obtained, which is conducive to the improvements in the capturing effect and the capturing efficiency.

Illustratively, the user knows that today is sunny through check with the mobile terminal. Then the user can search with the sunny weather and the identification information of the to-be-captured road segment as search conditions, and can obtain the more precise capturing parameter, which is conducive to the improvements in the capturing effect and the capturing efficiency.

According to the example of the present disclosure, the target parameter of the to-be-captured road segment is obtained from the preset capturing parameters, thus saving time and energy of trial and error. Moreover, the target capturing parameter is obtained based on the preset capturing parameters, thus better obtaining the effect of video capturing and improving the capturing efficiency.

In some examples, the step that in a case where the mobile terminal is in an on-vehicle mode, and travels to the target road segment in the at least one to-be-captured road segment, the image acquisition is performed includes:
in a case where the mobile terminal is in the on-vehicle mode, and travels to the target road segment, a current environmental parameter of the target road segment is determined;
a corrected capturing parameter is obtained by adjusting a capturing parameter configured for the target road segment based on the current environmental parameter; and
the image acquisition is performed based on the corrected capturing parameter; and
the method further includes:
   identification information of the target road segment and the corrected capturing parameter are uploaded to a server after the image acquisition for the target road segment is completed. Here, the environmental parameters may include: a real-time road condition, a weather condition or existence of an obstruction of the road segment.

It should be noted that in a case where the mobile terminal is in the on-vehicle mode, and travels to the target road segment in the at least one to-be-captured road segment, the image acquisition is performed based on the capturing parameter configured for the target road segment.

It should be noted that different environmental parameters have different effects on the capturing parameters configured for different target road segments. The capturing parameter configured for the target road segment is adjusted according to a current capturing environment, which is conducive to optimization of image quality, and applied to different capturing scenarios and improves the capturing efficiency.

Illustratively, when the weather condition of the current environmental parameter changes from cloudy to sunny and light becomes bright, the ISO may be lowered to a lower level, such as ISO 100, to ensure the image quality. Or, an aperture value may be adjusted. A small aperture value may be selected for an extended depth of field; a large aperture value may be selected for highlighting a subject. Or, overexposure may be avoided by increasing the shutter speed.

It can be understood that the image acquisition for the target road segment is completed, and then the identification information of the target road segment and the corrected capturing parameter are uploaded to the server, such that other users can obtain the capturing parameter advantageously. Moreover, uploading the capturing parameter to the server can attract other interested users, and trigger exchanges and discussions, and the user can also learn new capturing skills and capturing methods and improve a capturing level. Moreover, by uploading the capturing parameter to the server, the user can implement recording and recalling advantageously, and the user can advantageously obtain the capturing parameter automatically when the user desires to capture next time.

According to the example of the present disclosure, in a case where the mobile terminal is in the on-vehicle mode, and travels to the target road segment, the environmental parameter of the target road segment is obtained, the capturing parameter configured for the target road segment is dynamically corrected by using the environmental parameter, and the image acquisition is performed based on the corrected capturing parameter. Apparently, the corrected capturing parameter can adapt to a site environment, thus making a capturing image clearer, enhancing a capturing effect and better satisfying capturing demand from the user. In addition, the identification information of the target road segment and the corrected capturing parameter are uploaded to the server. Thus, other users can obtain the capturing parameter advantageously, and the user can also improve the capturing level and obtain the capturing parameter advantageously.

In some examples, the step that in a case where the mobile terminal travels to a target road segment in the at least one to-be-captured road segment, image acquisition is implemented further includes:
in a case where a distance between a current position of the mobile terminal and a start point of the target road segment is less than a preset threshold, second prompt information is output; and
in cases where the mobile terminal travels to the target road segment and a capturing instruction input based on the second prompt information is detected, the image acquisition is performed.

It should be noted that the current position of the mobile terminal can be obtained in real time through a positioning system of the mobile terminal. The preset threshold may be a distance that allows the user to make a response and turn on the mobile terminal for the image acquisition. A magnitude of the preset threshold is related to a speed of the vehicle where the mobile terminal is located. The higher the speed of the vehicle, the greater the preset threshold.

Illustratively, average human auditory reaction time is 120 ms-182 ms. Assuming that a travelling speed of the vehicle is v and time for the user to open the mobile terminal for the image acquisition is 100 s, the preset threshold value L may be equal to (auditory reaction time + time for the user to open the mobile terminal for the image acquisition) × a formal speed of the vehicle, that is, L=(0.182+100)×v=100.182×v.

Here, the second prompt information may be voice prompt information or text prompt information, and is configured to prompt the user to open the mobile terminal for the image acquisition.

Illustratively, when the distance between the current position of the mobile terminal and the start point of the target road segment is less than the preset threshold L, the mobile terminal prompts the user to get ready for capturing, for example, through **the voice prompt: "the target road segment is just ahead,** please get ready to capture" **or by displaying a text pop-up window with a content "the target road** segment is just ahead, please get ready to capture" **on the mobile terminal. Thus, the user can** perform advantageously the image acquisition according to the capturing parameter configured for the target road segment.

It should be noted that the second prompt information may be information displayed by the mobile terminal or information displayed by the vehicle.

It can be understood that the second prompt information is output through the mobile terminal or the second prompt information is output through the vehicle. Then, when the mobile terminal cannot prompt the user due to poor signals or other conditions, the vehicle can prompt the user, such that it is guaranteed that the user can be prepared for capturing in advance based on the second prompt information before arriving at the target road segment, and capture in time and intelligently when travelling to the target road segment. According to the example of the present disclosure, the current position of the mobile terminal is obtained, and the distance between the current position of the mobile terminal and the start point of the target road segment is compared with the preset threshold. When the distance is less than the preset threshold, the user is prompted by the second prompt information, such that when the mobile terminal travels to the target road segment, the user can automatically capture the target road segment. The problem that the user fails to record a desired content since the user probably forgets to capture when approaching a capturing spot or forgets to turn on a camera at proper time is avoided.

In some examples, the method further includes:
in a case where the mobile terminal travels to an end point of the target road segment, third prompt information is output; and
in a case where a capturing end instruction input based on the third prompt information is detected, a target video corresponding to the target road segment is generated based on an image acquired between the start point of the target road segment and the end point of the target road segment.

Here, the third prompt information may be voice prompt information or text prompt information, and is configured to prompt the user to end capturing.

Illustratively, when the mobile terminal travels to the end point of the target road segment, the mobile terminal prompts the user to end the captur**ing, for example through the voice prompts: "the destination** of the target road segment has arrived, please end or close captur**ing" or by displaying a text pop-**up **window with a content "the destination of the target ro**ad segment has arrived, please end or terminate capturing" **on the mobile terminal. Thus, the user can click a button to end** capturing and generate the target video corresponding to the target road segment.

It should be noted that the third prompt information may be information displayed by the mobile terminal or information displayed by the vehicle.

It can be understood that the third prompt information is output through the mobile terminal or the third prompt information is output through the vehicle. Then, when the mobile terminal cannot prompt the user due to poor signals or other conditions, the vehicle can prompt the user, such that it is guaranteed that the user can end the capturing operation when arriving at the end point of the target road segment, and resources of the mobile terminal can be saved advantageously.

In the example of the present disclosure, in a case where the mobile terminal travels to the end point of the target road segment, the prompt information is output and configured to prompt the user to end the capturing and the target video corresponding to the target road segment is generated, which is conducive to saving of the resources of the mobile terminal.

In some examples, the method further includes:
identification information of the target road segment and a capturing parameter configured for the target road segment are uploaded to a server after the image acquisition for the target road segment is completed.

Illustratively, after the image acquisition for the target road segment is completed, the identification **information of the target road segment is a "first road" for example, and the** capturing parameter **configured for the "first road" includes the shutter speed, the aperture, the ISO, the exposure** compensation, the white balance, **the focusing mode and the image resolution. The "first road" and the** capturing parameter **configured for the "first road" are uploaded to the social media platform of the** server for other users to obtain. Thus, the user can improve the capturing level advantageously, record and recall a journey advantageously, and obtain the capturing parameter automatically when desiring to capture again next time advantageously.

In the example of the present disclosure, after the image acquisition for the target road segment is completed, the identification information of the target road segment and the capturing parameters configured for the target road segment are uploaded to the server, thus making the capturing parameter accessible to other users. In addition, the image acquisition is implemented based on the capturing parameter. Thus, the user can improve the capturing level advantageously, record and recall a journey advantageously, and obtain the capturing parameter automatically when desiring to capture again next time advantageously.

In some examples, the method further includes:
in a case where image acquisition of all to-be-captured road segments is completed, integrated data are obtained by integrating capturing parameters configured based on the to-be-captured road segments, and an instruction message is output by the mobile terminal, where the instruction message is configured to indicate an uploading operation; and
in a case where an uploading instruction input based on the instruction message is detected, the identification information and the integrated data of the to-be-captured road segments that are captured are uploaded to a server.

It should be noted that the identification information of the to-be-captured road segment and the capturing parameters are in one-to-one correspondence and are uploaded to the server.

Illustratively, the to-be-captured road segment includes a road segment 1, a road segment 2, a road segment 3 and a road segment 4, as well as a capturing parameter 1 corresponding to the road segment 1, a capturing parameter 2 corresponding to the road segment 2, a capturing parameter 3 corresponding to the road segment 3 and a capturing parameter 4 corresponding to the road segment 4. The road segment 1, the capturing parameter 1, the road segment 2, the capturing parameter 2, the road segment 3, the capturing parameter 3, the road segment 4 and the capturing parameter 4 are uploaded to the server together.

It can be understood that the identification information of the to-be-captured road segment and the capturing parameters are in the one-to-one correspondence, such that other users can obtain the capturing parameter advantageously or the user can obtain the capturing parameter advantageously when desiring to capture again. When a plurality of to-be-captured road segments and the parameters corresponding to the to-be-captured road segments are uploaded together, different capturing effects can be obtained advantageously based on different road segments, and a most suitable capturing road segment can also be selected from the plurality of road segments advantageously. Thus, the capturing effect and the capturing efficiency are improved.

In the example of the present disclosure, since different to-be-captured road segments may have different capturing effects, the image acquisition may be performed on all the to-be-captured road segments. After the image acquisition for all the to-be-captured road segments is completed, the capturing parameters configured for the to-be-captured road segments are integrated and uploaded to the server together. The integrated data are more complete, and can better satisfy viewing and analysis demand from the user. Moreover, the optimal capturing parameter can be selected from the integrated data, so as to present better capturing effects and improve the capturing efficiency.

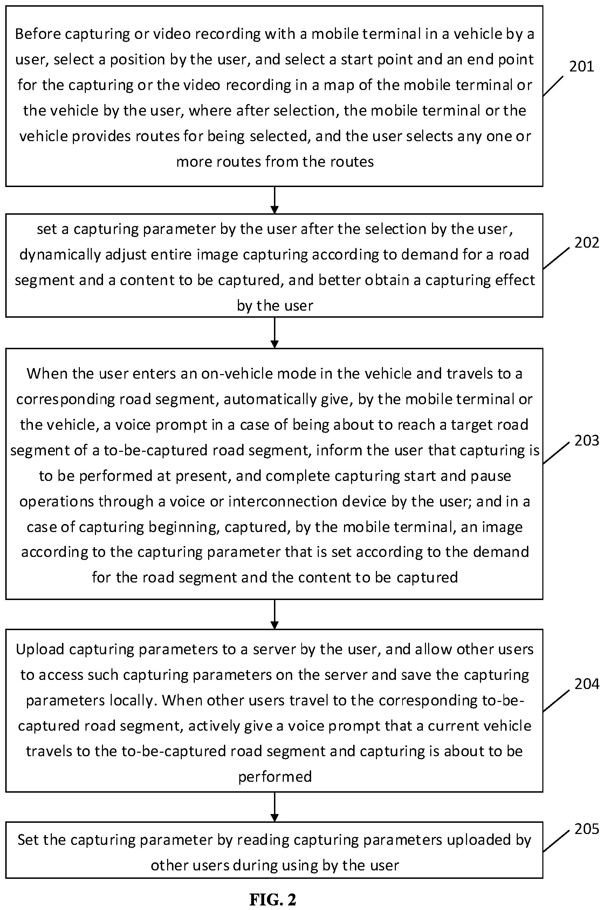

FIG. 2 is a flowchart II of a method for capturing an image according to an example. As shown in FIG. 2, the method mainly includes:
Step 201, before capturing or video recording with a mobile terminal in a vehicle by a user, a position is selected by the user, and a start point and an end point are selected for the capturing or the video recording in a map of the mobile terminal or the vehicle by the user, where after selection, the mobile terminal or the vehicle provides routes for being selected, and the user selects any one or more routes from the routes;
Step 202, after user selection, a capturing parameter is set by the user, entire image capturing is dynamically adjusted according to demand of a road segment and a content to be captured such that a better capturing effect is obtained by the user;
S203, when the user enters an on-vehicle mode in the vehicle and travels to a corresponding road segment, the mobile terminal or the vehicle automatically gives a voice prompt in a case of being about to reach a target road segment of a to-be-captured road segment, the user is informed that capturing is to be started at present, and capturing start and pause operations are completed through a voice or interconnection device by the user; and at a beginning of capturing, the mobile terminal captures the image according to the capturing parameter that is set according to the demand for the road segment and the content to be shot;
Step 204, capturing parameters are uploaded to a server by the user, and other users are allowed to access such capturing parameters on the server and save the capturing parameters locally. When other users travel to the corresponding to-be-captured road segment, a voice prompt that a current vehicle travels to the to-be-captured road segment and capturing is about to be performed is actively given;
S205, the user sets the capturing parameter by reading capturing parameters uploaded by other users during using.

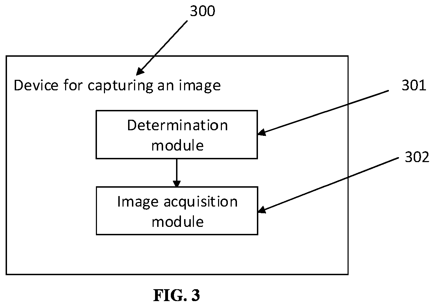

FIG. 3 is a block diagram of a device for capturing an image according to an example. As shown in FIG. 3, the device mainly includes:
a determination module 301 configured to determine, from a map interface displayed by a mobile terminal, at least one to-be-captured road segment; where each to-be-captured road segment includes at least one capturing object; and
an image acquisition module 302 configured to implement image acquisition in a case where the mobile terminal travels to a target road segment in the at least one to-be-captured road segment.

In some examples, the device 300 further includes:
in a case where a configuration operation on the to-be-captured road segment is detected, a capturing parameter corresponding to the to-be-captured road segment is configured. The capturing parameter of the to-be-captured road segment includes capturing parameters of each capturing object on the to-be-captured road segment.

In some examples, the device 300 further includes:
in a case where the configuration operation is detected, a feature of the to-be-captured road segment from a preset feature library is obtained based on identification information of the to-be-captured road segment on which the configuration operation acts; where the feature of the to-be-captured road segment includes a feature of the capturing object on the to-be-captured road segment, and the preset feature library pre-stores identifications of each road segment and features of each road segment as well as identifications of capturing objects on each road segment and features of each capturing object;
first prompt information is generated based on the feature of the to-be-captured road segment, and the first prompt information is output; and
based on the first prompt information, the capturing parameter corresponding to the to-be-captured road segment is configured.

In some examples, the device 300 further includes:
a target capturing parameter is determined from preset capturing parameters of a server based on the identification information of the to-be-captured road segment; where the preset capturing parameters are historical capturing parameters used when travelling to the road segment; and
it is determined that the target capturing parameter is the capturing parameter corresponding to the to-be-captured road segment.

In some examples, the device 300 further includes:
in a case where a selection operation on the map interface is detected, the at least one to-be-captured road segment is determined from the map interface based on the selection operation; and/or,
in a case where a route search instruction is detected, the at least one to-be-captured road segment is determined from preset road segments stored in a server based on the route search instruction and map information in the map interface. The preset road segments are historical road segments travelled by different mobile terminals and uploaded to the server by the different mobile terminals after performing image acquisition.

In some examples, the device 300 further includes:
in a case where the mobile terminal is in an on-vehicle mode, and travels to the target road segment in the at least one to-be-captured road segment, the image acquisition is implemented.

In some examples, the device 300 includes:
in a case where the mobile terminal is in the on-vehicle mode, and travels to the target road segment, a current environmental parameter of the target road segment is determined;
a corrected capturing parameter is obtained by adjusting a capturing parameter configured for the target road segment based on the current environmental parameter; and
the image acquisition is performed based on the corrected capturing parameter; and
the device 300 further includes:
   identification information of the target road segment and the corrected capturing parameter are uploaded to a server after the image acquisition for the target road segment is completed.

In some examples, the device 300 further includes:
in a case where a distance between a current position of the mobile terminal and a start point of the target road segment is less than a preset threshold, second prompt information is output; and
in cases where the mobile terminal travels to the target road segment and a capturing instruction input based on the second prompt information is detected, the image acquisition is performed.

In some examples, the device 300 further includes:
in a case where the mobile terminal travels to an end point of the target road segment, third prompt information is output; and
in a case where a capturing end instruction input based on the third prompt information is detected, a target video corresponding to the target road segment is generated based on an image acquired between the start point of the target road segment and the end point of the target road segment.

In some examples, the device 300 further includes:
identification information of the target road segment and a capturing parameter configured for the target road segment are uploaded to a server after the image acquisition for the target road segment is completed.

In some examples, the device 300 further includes:
in a case where the to-be-captured road segment complete image acquisition, obtaining integrated data by integrating the capturing parameter configured based on the to-be-captured road segment, and outputting an instruction message by the mobile terminal, where the instruction message is configured to indicate an uploading operation; and
in a case where an uploading instruction input based on the instruction message is detected, uploading the identification information and the integrated data of the to-be-captured road segment that is captured to a server.

With respect to the device in the above example, specific ways in which the modules execute operations have been described in detail in the examples relating to the method, and will not be described in detail here.

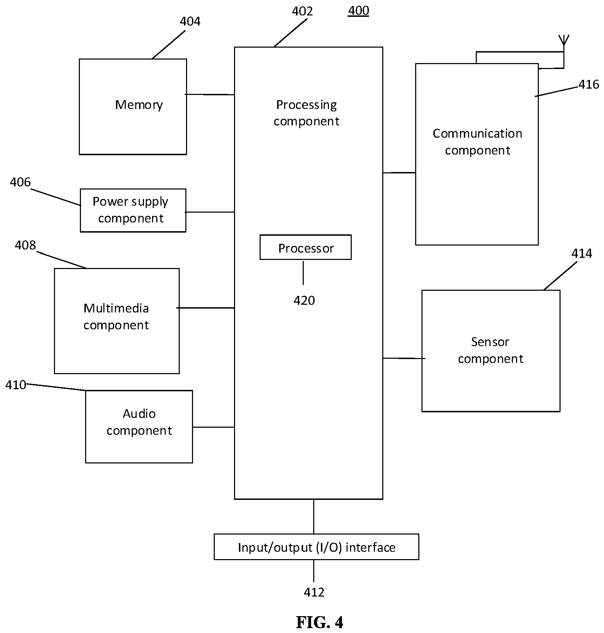

FIG. 4 is a structural block diagram of a device 400 according to an example. For example, the device 400 may be a mobile phone, a computer, a digital broadcast terminal, a message transceiver device, a game console, a portable android device, a medical device, a fitness device, a personal digital assistant, etc.

With reference to FIG. 4, the device 400 may include one or more of a processing component 402, a memory 404, a power supply component 406, a multimedia component 408, an audio component 410, an input/output (I/O) interface 412, a sensor component 414, and a communication component 416.

The processing component 402 generally controls overall operations of the device 400, such as at least one operation related to displaying, a telephone call, data communication, a camera operation, and a recording operation. The processing component 402 may include one or more processors 420 for executing an instruction, and completing all or some steps of the method described above. In addition, the processing component 402 may include one or more modules for interaction between the processing component 402 and other components. For example, the processing component 402 may include a multimedia module to facilitate interaction between the multimedia component 408 and the processing component 402.

The memory 404 is configured to store various types of data to support the operation on the device 400. Instances of such data include at least one of the following: instructions configured for any application or method operating on the device 400, contact data, phonebook data, messages, pictures and videos. The memory 404 may be implemented by any type of volatile or non-volatile storage devices, or their combinations, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 406 energizes various components of the device 400. The power supply component 406 may include at least one of the following: a power management system, one or more power supplies, or other components associated with power generation, management and distribution for the device 400.

The multimedia component 408 includes a screen providing an output interface between the device 400 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, swipe, and a gesture on the touch panel. The touch sensor may not only sense a boundary of the touch or swipe action, but also measure time of duration and a pressure associated with the touch or swipe action. In some examples, the multimedia component 408 includes a front-facing camera and/or a rear-facing camera. When the device 400 is in an operational mode, such as a capturing mode or a video mode, the front-facing camera and/or the rear-facing camera may receive external multimedia data. Each of the front-facing camera and the rear-facing camera may be a fixed-focus optical lens system or have a focal length and an optical zoom capacity.

The audio component 410 is configured to output and/or input an audio signal. For example, the audio component 410 includes a microphone (MIC). When the device 400 is in an operational mode, such as a call mode, a recording mode or a voice recognition mode, the microphone is configured to receive an external audio signal. The audio signal received may be further stored in the memory 404 or transmitted through the communication component 416. In some examples, the audio component 410 further includes a speaker configured to output the audio signal.

The I/O interface 412 provides an interface between the processing component 402 and a peripheral interface module, which may be a keyboard, a click wheel, a button, etc. These buttons may include, but are not limited to: a home button, a volume button, a start button and a lock button.

The sensor component 414 includes one or more sensors configured to provide state assessment in various aspects for the device 400. For example, the sensor component 414 may detect a startup/shutdown state of the device 400, and relative positioning of components, for example, a display and a keypad of the device 400. The sensor component 414 may further detect a location change of the device 400 or a component of the device 400, presence or absence of a touch between the user and the device 400, an orientation or acceleration/deceleration of the device 400, and a temperature change of the device 400. The sensor component 414 may include a proximity sensor configured to detect the presence of a nearby object in the absence of any physical touch. The sensor component 414 may further include an optical sensor, such as a complementary metal oxide semiconductor (CMOS) or a charge coupled device (CCD) image sensor, for use in imaging applications. In some examples, the sensor component 414 may further include, but is not limited to, at least one of the following: an acceleration sensor, a gyroscope sensor, a magnetic sensor, a pressure sensor and a temperature sensor.

The communication component 416 is configured to facilitate wired or wireless communication between the device 400 and other devices. The device 400 may access a radio network based on a communication standard, such as Wi-Fi, the 4^{th} generation mobile communication technology (4G) or the 5^{th} generation mobile communication technology (5G), or their combinations. In an example, the communication component 416 receives a broadcast signal or broadcast related information from an external broadcast management system via a broadcast channel. In an example, the communication component 416 further includes a near field communication (NFC) module to promote short-range communications. For example, the NFC module may be implemented based on a radio frequency identification (RFID) technology, an infrared data association (IrDA) technology, an ultra wide band (UWB) technology, a Bluetooth (BT) technology and other technologies.

In an example, the device 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components.

In an example, a non-transitory computer-readable storage medium including an instruction is further provided, such as the memory 404 including an executable instruction or a computer program. The instruction or the computer program may be executed by the processor 420 of the device 400, so as to implement the method described above. For example, the non-transitory computer-readable storage medium may be a ROM, a random access memory (RAM), a compact disc read-only memory (CD-ROM), a magnetic tape, a floppy disc, an optical data storage device, etc.

A non-transitory computer-readable storage medium is provided. When an instruction in the storage medium is executed by a processor, a mobile terminal is caused to perform any method for capturing an image according to the example of the present disclosure. For example, the method includes:
at least one to-be-captured road segment is determined from a map interface displayed by a mobile terminal, where each to-be-captured road segment includes at least one capturing object; and
in a case where the mobile terminal travels to a target road segment in the at least one to-be-captured road segment, image acquisition is performed.

The example of the present disclosure provides a computer program product. The computer program product includes: a computer instruction or an executable instruction. The computer instruction or the executable instruction is stored in a computer-readable storage medium. A processor of a computer device reads the computer program or the executable instruction from the computer-readable storage medium. The processor executes the computer program or the executable instruction, so as to cause the computer device to perform any method for capturing an image according to the example of the present disclosure.

## Claims

1. A method for capturing an image, comprising:
determining (S101), from a map interface displayed by a mobile terminal, at least one to-be-captured road segment, wherein the at least one to-be-captured road segment comprises at least one capturing object; and
performing (S102) image acquisition in a case where the mobile terminal travels to a target road segment in the at least one to-be-captured road segment.

2. The method according to claim 1, further comprising:
configuring a capturing parameter corresponding to the to-be-captured road segment in a case where a configuration operation on the to-be-captured road segment is detected; wherein the capturing parameter of the to-be-captured road segment comprises a capturing parameter of the at least one capturing object on the to-be-captured road segment.

3. The method according to claim 2, wherein configuring the capturing parameter corresponding to the to-be-captured road segment in the case where the configuration operation on the to-be-captured road segment is detected comprises:
obtaining, based on identification information of the to-be-captured road segment on which the configuration operation acts, a feature of the to-be-captured road segment from a preset feature library in the case where the configuration operation is detected, wherein the feature of the to-be-captured road segment comprises a feature of the at least one capturing object on the to-be-captured road segment,
and the preset feature library pre-stores an identification of at least one road segment, a feature of the at least one road segment, an identification of the at least one capturing object on the at least one road segment and a feature of the at least one capturing object;
generating first prompt information based on the feature of the to-be-captured road segment;
outputting the first prompt information; and
configuring the capturing parameter corresponding to the to-be-captured road segment based on the first prompt information.

4. The method according to claims 2 or 3, wherein configuring the capturing parameter corresponding to the to-be-captured road segment in the case where the configuration operation on the to-be-captured road segment is detected further comprises:
determining a target capturing parameter from preset capturing parameters of a server based on identification information of the to-be-captured road segment, wherein the preset capturing parameters are historical capturing parameters used when travelling to the to-be-captured road segment; and
determining that the target capturing parameter is the capturing parameter corresponding to the to-be-captured road segment.

5. The method according to any one of claims 1 to 4, wherein determining (S101), from the map interface displayed by the mobile terminal, at least one to-be-captured road segment comprises at least one of:
determining, based on a selection operation, the at least one to-be-captured road segment from the map interface, in a case where the selection operation on the map interface is detected;
determining, based on a route search instruction and map information in the map interface, the at least one to-be-captured road segment from preset road segments stored in a server, in a case where the route search instruction is detected, wherein the preset road segments are historical road segments travelled by different mobile terminals and uploaded to the server by the different mobile terminals after performing image acquisition.

6. The method according to any one of claims 1 to 5, wherein performing (S102) image acquisition in the case where the mobile terminal travels to the target road segment in the at least one to-be-captured road segment comprises:
performing the image acquisition in a case where the mobile terminal is in an on-vehicle mode and travels to the target road segment in the at least one to-be-captured road segment.

7. The method according to claim 6, wherein performing the image acquisition in the case where the mobile terminal is in the on-vehicle mode and travels to the target road segment in the at least one to-be-captured road segment comprises:
determining a current environmental parameter of the target road segment, in the case where the mobile terminal is in the on-vehicle mode and travels to the target road segment;
obtaining a corrected capturing parameter by adjusting a capturing parameter configured for the target road segment based on the current environmental parameter; and
performing the image acquisition based on the corrected capturing parameter; and

8. The method according to claim 7, wherein the method further comprises:
uploading identification information of the target road segment and the corrected capturing parameter to a server after completing the image acquisition for the target road segment.

9. The method according to any one of claims 1 to 8, wherein performing (S102) image acquisition in the case where the mobile terminal travels to the target road segment in the at least one to-be-captured road segment further comprises:
outputting second prompt information, in a case where a distance between a current position of the mobile terminal and a start point of the target road segment is less than a preset threshold; and
performing the image acquisition, in cases where the mobile terminal travels to the target road segment and a capturing instruction input based on the second prompt information is detected.

10. The method according to claim 9, further comprising:
outputting third prompt information, in a case where the mobile terminal travels to an end point of the target road segment; and
generating a target video corresponding to the target road segment based on an image acquired between the start point of the target road segment and the end point of the target road segment, in a case where a capturing end instruction input based on the third prompt information is detected.

11. The method according to any one of claims 3 to 10, further comprising:
uploading identification information of the target road segment and a capturing parameter configured for the target road segment to a server after completing the image acquisition for the target road segment.

12. The method according to any one of claims 3 to 11, wherein the at least one to-be-captured road segment comprises a plurality of to-be-captured road segments, and the method further comprising:
obtaining, by the mobile terminal, integrated data by integrating capturing parameter configured based on the plurality of to-be-captured road segments, in a case where the plurality of to-be-captured road segment completes image acquisition,
outputting, by the mobile terminal, an instruction message, wherein the instruction message is configured to indicate an uploading operation; and
uploading the identification information and the integrated data of the plurality of to-be-captured road segments that are captured to a server, in a case where an uploading instruction input based on the instruction message is detected.

13. A device (300) for capturing an image, comprising:
a determination module (301), configured to determine, from a map interface displayed by a mobile terminal, at least one to-be-captured road segment; wherein the at least one to-be-captured road segment comprises at least one capturing object; and
an image acquisition module (302), configured to perform image acquisition in a case where the mobile terminal travels to a target road segment in the at least one to-be-captured road segment.

14. A non-transitory computer-readable storage medium, storing one or more computer programs configured to be executed by one or more processors of a processing device, the one or more programs comprising instructions, wherein the e instructions, when executed by the processing device, cause the processing device to implement steps of the method according to any one of claims 1 to 11.

15. A computer program product, comprising computer programs or instructions, wherein the computer programs or the instructions, when executed by one or more processors of a processing device, cause the processing device to implement steps of the method according to any one of claims 1 to 11.
